**Europäisches Patentamt**

**European Patent Office**

**Office européen des brevets**

(19)

(11) Veröffentlichungsnummer: **0 017 846**
**B1**

(12) ## EUROPÄISCHE PATENTSCHRIFT

(45) Veröffentlichungstag der Patentschrift:
**11.07.84**

(21) Anmeldenummer: **80101737.7**

(22) Anmeldetag: **01.04.80**

(51) Int. Cl.³: **F 24 D 3/00**

(54) **Umhüllung für verdeckt oder versenkt eingebaute, als Wärmetauscher dienende Leitungsrohre oder -schläuche.**

(30) Priorität: **21.04.79 DE 2916166**

(43) Veröffentlichungstag der Anmeldung:
**29.10.80 Patentblatt 80/22**

(45) Bekanntmachung des Hinweises auf die Patenterteilung:
**11.07.84 Patentblatt 84/28**

(84) Benannte Vertragsstaaten:
**AT BE CH FR GB LI NL SE**

(56) Entgegenhaltungen:
**CH - A - 552 179**
**DE - A - 1 929 529**
**DE - A - 2 815 416**
**DE - A - 2 935 703**
**GB - A - 1 366 307**

(73) Patentinhaber: **Dier, Emil, Niederbexbacher-Strasse 31,**
**D-6680 Neunkirchen-Kohlhof (DE)**

(72) Erfinder: **Dier, Emil, Niederbexbacher-Strasse 31,**
**D-6680 Neunkirchen-Kohlhof (DE)**
Erfinder: **Kümmel, Bruno, Auf dem Kopf,**
**D-6682 Ottweiler (DE)**

ACTORUM AG

## Beschreibung

Die Erfindung betrifft eine Umhüllung für verdeckt oder versenkt eingebaute, als Wärmetauscher dienende Leitungsrohre oder -schläuche für Fussbodenheizungen.

Verdeckt oder versenkt eingebaute Wärmetauscherleitungen für eine Fussbodenheizung, verursachen erhebliche Folgekosten, wenn sie einmal undicht werden. Dann müssen in der Regel grosse Flächen des Fussbodens, d.h. des Parketts, der Bodenfliesen oder des Kunststoffbelages und der darunter liegende Estrich herausgeschlagen werden, un am die beschädigte Leitung heranzukommen und diese dann teilweise oder sogar ganz auswechseln zu können. Das haben die Versicherungsgesellschaften beim Festlegen ihrer Prämien für Gebäude mit Flächenheizungen auch bereits einkalkuliert und diese entsprechend angehoben.

Endlich verunsichern die Hersteller von Heizkesseln die Besteller und die Betreiber von Warmwasser-Flächenheizungen mit der Bahauptung, durch die als Heizleitung verwendeten Kunststoffrohre könne Luftsauerstoff hindurchdiffundieren, der eine Schädigung der metallischen Kessel und Armaturen herbeiführen könne.

Aus der CH-A-552 179 ist eine Umhüllung für verdeckt oder versenkt eingebaute, als Wärmetauscher dienende Leitungsrohre, vorzugsweise aus Kupfer, zum gleichmässigen Beheizen bzw. Erwärmen von Bodenflächen, ausschliesslich ausserhalb von Gebäuden, wie Teilstücke von Strassenflächen, Landepisten, Rasenflächen von Spielfeldern, Bodenflächen in Rebbaugebieten oder Gemüsekulturen, wofür die Umhüllung als ein zwei Leitungsrohre mit Abstand umgebendes Schutzrohr sein muss und als solches auch ausgewiesen ist, das weniger schweren bis schwersten Verkehrslasten standhalten muss. Zudem wird der Raum zwischen den beiden Leitungsrohren mit mehr oder weniger wärmeleitenden Stoffen oder Flüssigkeit gefüllt. Auch ist nicht ausgeführt, aus welchen Materialien die Schutzrohre gefertigt sind und ob sie die umhüllten Rohrleitungen «vorzugswiese aus Kupfer» gegen schädigende Einflüsse von aussen her abzuschirmen vermögen, da auch Kupfer unter bestimmten, noch nicht restlose erforschten Voraussetzungen korrodieren kann – siehe Sanitär- und Heizungstechnik Nr. 10 aus 1981-.

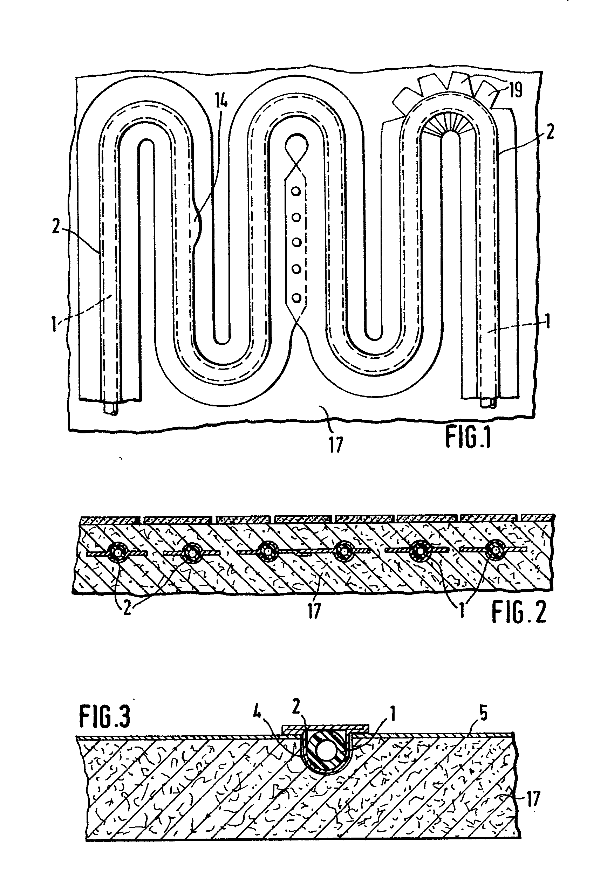

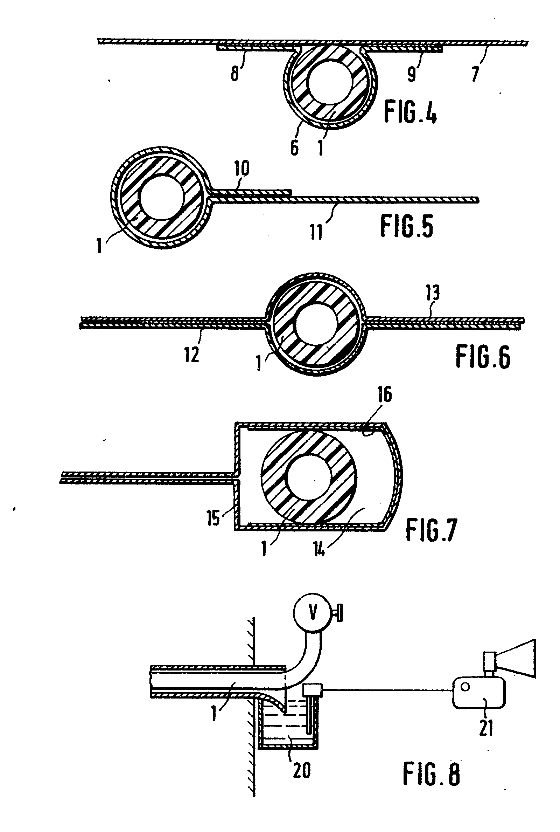

Ganz anders verhält es sich mit der erfindungsgemässen Aufgabe der Umhüllung aus einer Metall-, vornehmlich aus einer Alufolie, die ein- oder beidseitig mit einer Kunststoffhaut kaschiert sind. Der Abstand zwischen Hüllenschlauch 2 und Leitungsrohr 1 bleibt bestehen, wie Fig. 3 und Fig. 4 besonders deutlich zeigen, wobei dieser Abstand die aus einer Leckage der Rohrleitung austretende Flüssigkeit auffangen wird. Ausserdem schützt die Umhüllung die Rohrleitung gegen alle schädigenden Einflüsse, wie zum Beispiel Sauerstoff-Diffusion. Zum weiteren Unterschied zu der Entgegenhaltung dient die Umhüllung nach Anspruch 1 bis 9 ausschliesslich der Beheizung von Gebäuden.

Weiterhin ist aus der GB-A-1366307 eine Flüssigkeitstransportleitung mit einem Leckage-Orter bekannt, bei der die Flüssigkeitstransportleitung von einem Hüllschlauch so umfasst ist, dass zwischen beiden ein im Querschnitt ringförmiger Zwischenraum entsteht, der formstabil sein muss, in den die bei einer Leckage aus der Transportleitung austretende Flüssigkeit hineinläuft und zu einem Auffangbecken transportiert wird, wo sie eine an sich bekannte Warneinrichtung auslöst.

Bezüglich des eigenen Anspruchs 1 ist festzustellen, dass diese entgegengehaltene Einrichtung von der erfindungsgemässen in wesentlichen Punkten abweicht.

Aufgabe der entgegengehaltenen Einrichtung ist es, Rohrleitungen für gefährliche und/oder teure Stoffe mit einer bei einer Leckage sofort ansprechenden Alarmeinrichtung auszurüsten. Demgegenüber liegt der eigenen Erfindung die Aufgabe zu Grunde, Wärmetauscherleitungen gegen alle schädigenden Einflüsse und Einwirkungen von aussen her abzuschirmen. Der zur Lösung dieser Aufgabe verwendete Hüllschlauch soll aus einem die Wärme gut leitenden Material bestehen und korrosionsbeständig sein, und er soll sich beim Einbau so anschmiegen und am oberen Rohrleitungsscheitel so breitdrücken, dass er die wärmeleitende Verbindung zu vorhandenen Wärmeleit- und Wärmeverteilschichten bildet.

Der Hüllschlauch soll, und das ist ein wesentlicher Unterschied, die bei einer Leckage aus Wärmetauscherleitungen für Fussbodenheizungen austretende Heizflüssigkeit auffangen und an einen Auffangbehälter leiten. An diesem Auffangbehälter befinder sich eine einzige, zweckmässig akustische Alarmeinrichtung.

Der Erfindung liegt die Aufgabe zu Grunde, eine verdeckt oder versenkt eingebaute, als Wärmetauscher dienende Rohr- oder Schlauchleitung so auszubilden, bzw. mit einem solchen Schutz zu versehen, dass diese Leitung gegen alle schädigenden Einflüsse und Einwirkungen abgeschirmt ist, dass die bei einer durch Fabrikationsfehler, Alterung oder sonstwie bedingten Leckage der Leitung austretende Flüssigkeit aufgefangen, schadlos abgeleitet und gegebenenfalls signalisiert wird, und dass durch diese Massnahme zusätzlich ein besserer Wärmeübergang von der Leitung in die sie umgebende Schichten und umgekehrt, sowie bei einer Flächenheizung eine gleichmässige Temperatur über die gesamte zu temperierende Fläche erreicht wird.

Diese Aufgabe wurde gelöst durch die Umhüllung für verdeckt oder versenkt eingebaute, als Wärmetauscher dienende Leitungsrohre oder -schläuche und einen Leckflüssigkeit auffangenden Behälter, in den der Hüllschlauch mündet, gemäss dem kennzeichnenden Teil des Patentanspruchs 1.

Weitere vorteilhafte Ausgestaltungen der Umhüllung sind im kennzeichnenden Teil der Patentansprüche 2 bis 9 beschrieben.

Die Zeichnung erläutert die Erfindung an Ausführungsbeispielen.

Es zeigt:

Fig. 1 die Draufsicht einer schleifenförmigen verlegten Wärmetauscherleitung mit ihrer Umhüllung in drei verschiedenen Ausführungsformen,

Fig. 2 ein Schnittbild hierzu,

Fig. 3 das Schnittband einer in Kanälen verlegten Leitung mit ihrem Hüllschlauch bei einer Fussbodenheizung,

Fig. 4 das Schnittbild einer Wärmetauscherleitung mit einer sie von unten umfassenden Hüllfolie, die beidseitig mit dem oberseitigen, überstehenden Abdeckstreifen verschweisst ist,

Fig. 5 das Schnittbild einer Wärmetauscherleitung mit einseitig übestehendem Hüllschlauchrand,

Fig. 6 das Schnittbild einer Wärmetauscherleitung mit beidseitig überstehenden Hüllschlaurändern,

Fig. 7 das Schnittbild einer Wärmetauscherleitung mit ihrem Hüllschlauch im Bereich eines Ausdehnungsfreiraums in der Grundplatte und

Fig. 8 die schematische Darstellung des die Leckflüssigkeit am Ende des Hüllschlauchs auffangenden Behälters mit dem Warngerät.

Die Umhüllung der als Wärmetauscher dienenden Leitung 1 besteht aus einem korrosionssicheren, die Wärme besonders gut leitenden Material gefertigten, sie mit Abstand umgebenden Hüllenschlauch 2. Als Material hierfür ist eine ein- oder beidseitig mit einer Kunststoffhaut kaschierte Metall-, vornehmlich eine Alufolie vorgesehen. Dabei erbringt die Metallfolie die gute Wärmeleitung, während die aufkaschierte Kunststoffhaut den Korrosionsschutz dieser Metallfolie übernimmt und die Verschweissbarkeit des Materials ermöglicht.

Ausser dem Schutz der Leitung 1 gegen schädigende Einflüsse von aussen und der Weiterleitung der bei einer Leckage austretenden Flüssigkeit, soll der Hüllschlauch 2 auch dazu dienen, die von der Leitung 1 abgegebene Wärme oder Kälte bei einer Heiz- oder Kühlanlage, oder beim Betrieb einer Wärmepumpe, die aus dem sie umgebenden Medium aufgenommene Wärme in die Flüssigkeit der Leitung 1 weiterzuleiten. Hierzu dienen insbesondere die breiten Ränder des Hüllschlauchs 2. Diese Ränder des Hüllschlauchs können so breit sein, dass sie, bei einer schleifenförmig verlegten Heiz- und/oder Kühlleitung aneinanderstossend, eine Wärmeverteilschicht darstellen, die eine absolut gleichmässige Temperatur über die gesamte zu temperierende Fläche garantiert. Diese Ränder können aber auch lediglich den Anschluss an eine bereits bestehende, im Bereich der Grundplatten-Leitungskanäle 4 aber unterbrochene Wärmeverteilschicht bilden.

Die überstehenden Ränder des Hüllschlauchs 2 bestehen entweder, wie in Fig. 3 gezeigt, aus Teilen des beidseitig breitgequetschten Hüllschlauchs 2 selbst, oder aber aus überstehenden Lappen, die ein- oder beidseitig über den Hüllschlauch hinausragen. Bei dem Beispiel gemäss Fig. 4 besteht der Hüllschlauch aus zwei Folienbändern 6, 7, von denen das untere 6 die Leitung 1 umgreift und dessen beidseitigen überstehenden Ränder 8, 9 mit dem darüberliegenden Folienband 7 verschweisst oder verklebt sind.

Der Hüllschlauch gem. Fig. 5 besteht aus einem einzigen Folienband, das die Leitung 1 umgreift und dessen überstehenden Ränder 10, 11 miteinander verschweisst sind.

Fig. 6 zeigt einen Hüllschlauch aus zwei Bändern 12, 13, die gleich breit sind und die die Leitung 1 symmetrisch umgreifen. Auch hier sind wieder die überstehenden Ränder der beiden Folienstreifen miteinander verschweisst.

Damit sich die Leitung 1 einer Heizungsanlage in den dafür vorgesehenen Freiräumen 14 der Grundplatte ungehindert ausdehnen kann, ist hier der Innendurchmesser des Hüllschlauches 15 genügend gross gehalten. Um ein Breitquetschen des Hüllschlauchs 15 in diesem Fall zu verhindern, ist er hier durch eine Hülse 16, die in ihrer Form dem Profil des betreffenden Freiraums 14 angepasst ist, abgestützt.

Die überstehenden Ränder des Hüllschlauchs 2 können sich bei nebeneinander liegenden Leitungssträngen, wie in der Mitte der Fig. 1 gezeigt ist, auch überdecken und in diesem Fall zur Befestigung des Hüllschlauchs auf der Grundplatte 17 dienen. Hierzu genügt ein einfaches Aufnageln. Es ist dabei nur zu beachten, dass der Hüllschlauch 2 dicht bleibt.

Bei schleifenförmig verlaufenden Leitungen 1 kann es, um eine Überdehnung der Hüllschauchfolie an diesen Umkehrstellen zu verhindern, zweckmässig sein, die äusseren Ränder 19 des Hüllschlauchs 2, wie in Fig. 1 dargestellt, mit radial verlaufenden Einschnitten zu versehen.

Die bei einer Leckage aus der Leitung 1 ausgetretene Flüssigkeit wird im Inneren des Hüllschlauchs 2 bis zu einem an dessen Ende vorgesehenen Behälter 20 geleitet, wo sie schadlos aufgefangen wird und ein dort vorgesehenes Warngerät auslösen kann. Es ist auch Vorsorge getroffen, dass weder am Anfang noch am Ende des Hüllschlauchs 2 Luft eintreten kann, sodass durch den Hüllschlauch auch eine Sauerstoffdiffusion sicher vermeiden wird.

## Patentansprüche

1. Umhüllung für verdeckt oder versenkt eingebaute, als Wärmetauscher dienende Leitungsrohre oder -schläuche für Fussbodenheizungen, die aus einem die Leitung (1) mit Abstand umgebenden Hüllschlauch (2) besteht, dadurch gekennzeichnet, dass dessen Material korrosionsgeschützt ist und die Wärme gut leitet, und dass der Hüllschlauch (2) in einen die Leckflüssigkeit auffangenden Behälter (20) mündet.

2. Umhüllung nach Anspruch 1, dadurch gekennzeichnet, dass das Material des Hüllschlauchs (2) aus einer ein- oder beidseitig mit einer Kunststoffhaut kaschierten Metallfolie besteht.

3. Umhüllung nach einem der Ansprüche 1 oder 2, dadurch gekennzeichnet, dass der Hüllschlauch (2) aus mindestens einem Folienband besteht, dessen Ränder dicht miteinander verbunden sind.

4. Umhüllung nach einem der Ansprüche 1 bis 3, dadurch gekennzeichent, dass der Innendurchmesser des Hüllschlauches (2) mindestens so gross ist, dass er, über der in Leitungskanälen (4) der Grundplatte (17) verlegten Leitung (1) breitgedrückt, beidseitig die Ränder der dort ausgesparten Wärmeverteilschicht (5) überdeckt und der Leitung (1) im Bereich der Ausdehnungsfreiräume (14) und genügend Platz zum Ausweichen bietet.

5. Umhüllung nach einem der Ansprüche 1 bis 4, dadurch gekennzeichnet, dass der Hüllschlauch (2) im Bereich der Ausdehnungsfreiräume (14) durch eine dem Profil dieser Freiräume angepasste Hülse (16) vor dem Zusammenquetschen geschützt ist.

6. Umhüllung nach einem der Ansprüche 1 bis 3, dadurch gekennzeichnet, dass die überstehenden Ränder des Hüllschlauchs (2) so breit sind, dass sie sich bei schleifenförmig verlaufenden Heiz- und/oder Kühlleitungen gegenseitig überdecken oder dort aneinanderstossen.

7. Umhüllung nach Anspruch 6, dadurch gekennzeichnet, dass die sich gegenseitig überdeckenden Ränder des Hüllschaluchs (2) durch Nageln auf der Grundplatte (17) befestigt sind, ohne die Dichtheit des Hüllschlauchs zu zerstören.

8. Umhüllung nach einem der Ansprüche 1 – 7, dadurch gekennzeichnet, dass wenigstens die äusseren Ränder (19) des Hüllschlauchs (2) im Bereich der Umlenkbögen einer schleifenförmig verlegten Leitung (1) mit radial verlaufenden, die Dichtheit des Hüllschlauchs aber nicht zerstörenden Einschnitten versehen sind.

9. Umhüllung nach einem der Ansprüche 1 bis 8, dadurch gekennzeichnet, dass der Hüllschlauch (2) und/oder der sich an ihn anschliessende Behälter (20) zum Auffangen der Leckflüssigkeit mit einer optischen oder akustischen Warneinrichtung (21) versehen ist.

**Claims**

1. Envelope for concealed or sunken conduit pipes or hoses that serve as heat exchangers for floor heatings comprising and enveloping hose (2) which surrounds the conduit pipe (1) at a given distance characterized in that said enveloping hose (2) is made from a corrosion-proof material of good thermal conductivity and that said enveloping hose (2) ends in a container (20) for collecting the leaking fluid.

2. Envelope according to claim 1 characterized in that the material of said enveloping hose (2) consists of a metal foil coated on one side or on both sides with a plastic film.

3. Envelope according to one of the claims 1 or 2 characterized in that said enveloping hose (2) consists of at least one foil strip, the edges of which are tightly sealed to each other.

4. Envelope according to one of the claims 1 to 3 characterized in that the inside diameter of said enveloping hose (2) is at least as large as to allow the enveloping hose (2), after flattening of said enveloping hose (2) over the conduit (1) laid in conduit ducts (4) of the base plate (17), to overlap, on either side, the edges of the heat dissipating layer (5) spared at this site and to leave sufficient room for the conduit (1) to yield in the expansion clearances (19).

5. Envelope according to one of the claims 1 to 4 characterized in that said enveloping hose (2) is protected from being squeezed together in the area of the expansion clearances (14) by means of a spacer sleeve (16) adjusted to the section of said expansion clearances (14).

6. Envelope according to one of the claims 1 to 3 characterized in that the projecting edges of the enveloping hose (2), with heating or cooling conduits running in loops, are sufficiently wide to overalp each other or be contiguous at these sites.

7. Envelope according to claim 6 characterized in that the overlapping edges of the enveloping hose (2) are attached to the base plate (17) by nailing without harming the thightness of said enveloping hose (2).

8. Envelope according to one of the claims 1 to 7 characterized in that at least the outer edges (19) of the enveloping hose (2) are provided, in the area of the deflection arcs of a conduit (1) laid in loops, with radially running indents which, however, do not harm the thightness of the enveloping hose (2).

9. Envelope according to one of the claims 1 to 8 characterized in that the enveloping hose (2) and/ or the connected container (20) for collecting leaking fluid is provided with an optical or acoustic warning device (21).

**Revendications**

1. Enveloppe pour tubes ridiges ou tuyaux souples, cachés ou encastrés, faisant office d'échangeur de chaleur, pour sols chauffants, constituée d'une gaine (2) entourtant à une certaine distance le conduit (1) et caractérisée par le fait que la matière de cette gaine est protégée contre la corrosion et qu'elle conduit bien la chaleur, ainsi que par le fait que la gaine (2) débouche dans un réservoir (20) servant à la récupération des fuites.

2. Enveloppe selon revendication 1, caractérisée par le fait que la matière de la gaine (2) est constituée d'une feuille métallique doublée d'une pellicule en matère plastique, sur un côté ou sur les deux côtés.

3. Envelopp selon l'une des revendications 1 ou 2, caractérisée par le fait que la gaine (2) est formée au minimum d'un ruban, dont les bords sont reliés entre eux.

4. Enveloppe selon l'une des revendications 1 à 3, caractérisée par le fait que le diamètre intérieur de la gaine (2) est au moins d'une taille telle, qu'après avoir été écrasée au-dessous du conduit (1) posé dans canaux (4) de l'embase (17), il recouvre des deux côtés les bords de la couche de distributation de chaleur (5) spécialement découpée à cet endroit et qu'il offre au conduit (1) suffisamment de place pour se dilater dans la zone des espaces libres (14) prévus à cet effet.

5. Enveloppe selon l'une des revendications 1 à 4, caractérisé par le fait que la gaine (2) est protégée contre tout écrasement dans la zone des espaces libres de dilatation (14) au moyen d'une douille (16) adaptée au profil de ces espaces libres.

6. Enveloppe selon l'une des revendications 1 à 3, caractérisée par le fait que les bords en saillie de la gaine (2) sont d'une largeur telle qu'ils se recouvrent réciproquement ou se touchent lorsqu'il s'agit de conduits de chauffage et/ou de refroidissement décrivant des bocules.

7. Enveloppe selon revendication 6, caractérisée par le fait que les bords de la gaine (2) se recouvrant réciproquement sont fixés par des pointes à la plaque d'embase (17), sans pour autant nuire à l'étanchéité de la gaine.

8. Enveloppe selon l'une des revendications 1 à 7, caractérisée par le fait qu'au minimum les bords extérieurs (19) de la gaine (2) comportent, dans la zone des coudes de renvoi d'un conduit (1) bouclé, des entailles radiales ne détruisant toutefois pas l'étanchéité de la gaine.

9. Enveloppe selon l'une des revendications 1 à 8, caractérisée par le fait que la gaine (2) et/ou le réservoir (20) y faisant directement suite et servant à récupérer les fuites sont dotés d'un dispositif d'avertissement optique ou acoustique (21).

FIG.1

FIG.2

FIG.3

FIG.4

FIG.5

FIG.6

FIG.7

FIG.8